(19) Europäisches Patentamt
European Patent Office
Office européen des brevets

(11) **EP 2 848 803 B1**

(12) **EUROPEAN PATENT SPECIFICATION**

(45) Date of publication and mention
of the grant of the patent:
**24.08.2016 Bulletin 2016/34**

(51) Int Cl.:
*F03D 1/06* (2006.01)   *F03D 3/00* (2006.01)
*B63H 9/02* (2006.01)

(21) Application number: **13382358.3**

(22) Date of filing: **17.09.2013**

(54) **Wind turbine blade and method of controlling the lift of the blade**

Windturbinenblatt und Verfahren zur Regelung des Auftriebs eines Blatts

Pale d'éolienne et méthode de contrôle pour la portée de la pale

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.03.2015 Bulletin 2015/12**

(73) Proprietor: **Alstom Renovables España, S.L.
08005 Barcelona (ES)**

(72) Inventor: **Lopez Soler, Pablo
08029 Barcelona (ES)**

(74) Representative: **ZBM Patents - Zea, Barlocci &
Markvardsen
Plaza Catalunya, 1
08002 Barcelona (ES)**

(56) References cited:
**WO-A2-2008/111922    DE-A1-102007 059 285
FR-A1- 2 966 889**

**Description**

The present disclosure relates to wind turbine blades and methods of controlling the lift of such blades.

BACKGROUND ART

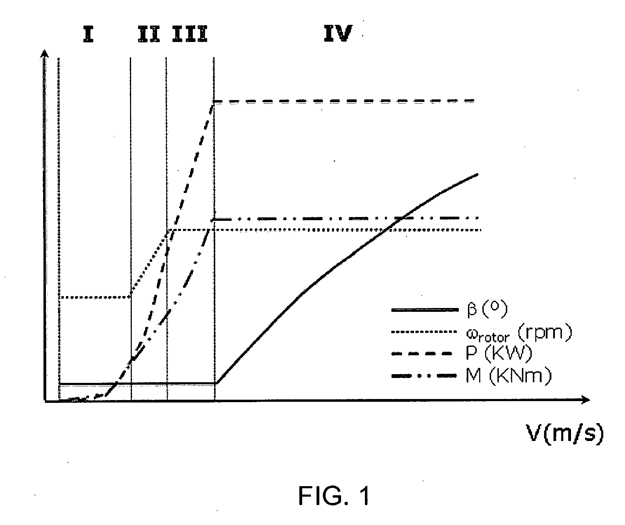

Modern wind turbines are commonly used to supply electricity into the electrical grid. Wind turbine blades are typically attached, at a blade root portion, to a rotor hub, either directly or through an extender. The rotor is set into rotation under the influence of the wind on the blades. The rotation of the rotor shaft drives the generator rotor either directly ("directly driven") or through the use of a gearbox. The operation of the generator produces the electricity to be supplied into the electrical grid.
The blades are typically designed for optimum aerodynamic conditions to optimize the wind turbine's performance for maximum generation of electricity.
A clear trend in the field of wind energy is to increase the size of the wind turbines. Both hub height and blade length have increased dramatically in recent years, and it appears that this trend will continue. With an increase in blade length, blades that are relatively lighter are needed in order to control the Cost of Energy (COE) of the wind turbine.
As blades become lighter (per meter length of the blade) and longer, blade loads such as e.g. the blade root bending moment may become more critical. The blade loads may be substantially affected by e.g. wind gusts, turbulence and wind shear. Changing wind velocities, and more particularly quickly changing wind velocities can especially affect the blade loads, and thereby impact the fatigue of various wind turbine components, such as e.g. the blades, hub, rotor shaft or gearbox.
Pitch systems may be employed in wind turbines for adapting the position of a wind turbine blade to varying wind conditions by rotating the blade along its longitudinal axis. In this respect, it is known to rotate a wind turbine blade in such a way that it generates less lift (and drag) when the wind speed increases. This way, even though the wind speed increases, the torque transmitted by the rotor to the generator remains substantially the same. It is furthermore also known to rotate wind turbine blades towards their stall position (so as to reduce the lift on the blades) when the wind speed increases. These wind turbines are sometimes referred to as "active-stall" wind turbines. Pitching may furthermore also be used for rotation of the blade towards its vane position, when a turbine is temporarily stopped or taken out of operation for e.g. maintenance.
Furthermore, aerodynamic devices such as e.g. flaps, slats, spoilers, and Boundary Layer Control devices may be employed on blades of wind turbines in order to influence and control the aerodynamic flow around the blades. Flaps along the trailing edge of a blade can be actuated relatively quickly and have the capability of quickly modifying the lift and drag (loads) of a blade. Flaps may therefore be employed on larger wind turbine blades to quickly alleviate loads when needed.
A variable speed wind turbine may typically be controlled by varying the generator torque and the pitch angle of the blades. As a result, aerodynamic torque, rotor speed and electrical power will vary.
A common prior art control strategy of a variable speed wind turbine is described with reference to figure 1. In figure 1, the operation of a typical variable speed wind turbine is illustrated in terms of the pitch angle ($\beta$), the electrical power generated (P), the generator torque (M) and the rotational velocity of the rotor ($\omega$), as a function of the wind speed. The curve representing the electrical power generated as a function of wind speed is typically called a power curve.
In a first operational range, from the cut-in wind speed to a first wind speed (e.g. approximately 5 or 6 m/s), the rotor may be controlled to rotate at a substantially constant speed that is just high enough to be able to accurately control it. The cut-in wind speed may be e.g. approximately 3 m/s.
In a second operational range, from the first wind speed (e.g. approximately 5 or 6 m/s) to a second wind speed (e.g. approximately 8.5 m/s), the objective is generally to maximize power output while maintaining the pitch angle of the blades constant so as to capture maximum energy. In order to achieve this objective, the generator torque and the rotor speed may be varied so as to keep the tip speed ratio $\lambda$ (tangential velocity of the tip of the rotor blades divided by the prevailing wind speed) constant so as to maximize the power coefficient $C_p$.
In order to maximize power output and keep $C_p$ constant at its maximum value, the rotor torque may be set in accordance with the following equation:

$$T = k.\omega^2, \text{ wherein } \text{k is a constant, and } \omega \text{ is the rotational speed of the}$$

wherein k is a constant, and $\omega$ is the rotational speed of the generator. In a direct drive wind turbine, the generator speed substantially equals the rotor speed. In a wind turbine comprising a gearbox, normally, a substantially constant ratio exists between the rotor speed and the generator speed.

In a third operational range, which starts at reaching nominal rotor rotational speed and extends until reaching nominal power, the rotor speed may be kept constant, and the generator torque may be varied to such effect. In terms of wind speeds, this third operational range extends substantially from the second wind speed to the nominal wind speed e.g. from approximately 8.5 m/s to approximately 11 m/s.

In a fourth operational range, which may extend from the nominal wind speed to the cut-out wind speed (for example from approximately 11 m/s to 25 m/s), the blades may be rotated ("pitched") to maintain the aerodynamic torque delivered by the rotor substantially constant. In practice, the pitch may be actuated such as to maintain the rotor speed substantially constant. At the cut-out wind speed, the wind turbine's operation is interrupted.

In the first, second and third operational ranges, i.e. at wind speeds below the nominal wind speed (the sub-nominal zone of operation), the blades are normally kept in a constant pitch position, namely the "below rated pitch position". Said default pitch position may generally be close to a 0° pitch angle. The exact pitch angle in "below rated" conditions however depends on the complete design of the wind turbine.

The before described operation may be translated into a so-called power curve, such as the one shown in figure 1.

Wind turbine rotor blades normally comprise a cylindrical root portion, an airfoil portion and a transition portion between them. The cylindrical root portion is used for attaching the blade at the wind turbine rotor in a suitable bearing system. Any sort of pitch drive mechanism may be used to rotate ("pitch") the blade with respect to the hub. This cylindrical root portion generally does not generate a significant amount of lift and thus contributes very little to the energy production. The blade root portion is thus generally considered less relevant for the performance of energy production of the blade. On the other hand, structurally, it is very important as the highest bending loads occur at the root portion.

The desire for making the blade root portion aerodynamically more effective has been recognized.

In that sense, it is known to provide spoilers and/or vortex generators in the blade root portion in order to increase overall efficiency of the wind turbine. For example, document US6910867 describes blades having a connection part for connection to the hub. The connection part is provided with a member comprising a rib that projects from the connection part.

Document DE 10 2007 089 285 describes a wind turbine blade with a Magnus rotor on the leading edge of the blade root. Document WO 2008 111922 describes a wind turbine blade with a Magnus rotor placed inside the profile of the blade.

However there still exists a need for further improving the overall efficiency of the blades and in particular the use of the blade root portion.

SUMMARY

In a first aspect, a wind turbine blade is described. The blade comprises a proximal blade root portion for coupling to a hub or extender of a wind turbine, a distal airfoil portion having a lift-generating shape and a transition portion between them. The blade root portion comprises a substantially cylindrical shape, wherein the blade further comprises a cylinder rotatably mounted around the blade root portion.

Throughout the description and claims, the term "proximal" is used for the portion of the blade that is to be attached to the hub of a wind turbine when mounted and the term "distal" is used for the portion of the blade that is away from the attachment to the hub.

According to this aspect, when the cylinder rotates around the blade root portion it generates lift due to the well-known Magnus effect. This way, the blade root portion which does normally not contribute to the lift of the blade is able to add lift to the blade. The overall efficiency of the blade is thus improved.

A further effect produced by the cylinder when it rotates around the blade root portion is that it mitigates the local flow separation, i.e. it reduces the width of the wake. Reduction of the width of the aerodynamic wake locally reduces the drag. Therefore aerodynamic performance of the blade is further enhanced by the rotation of the cylinder. This effect is especially interesting for wind speeds equal to or above the nominal wind speed, i.e. in the supra-nominal zone of operation (fourth operational range of figure 1).

Yet a further effect of the rotation of a cylinder around the blade root portion is that as the aerodynamic flow around the blade root portion is improved, this improvement is also noted on the rest of the blade: the disturbances (turbulence, vortices) around the blade root portion that are normally present affect the aerodynamic flow around the rest of the blade. These disturbances may be avoided with examples according to this aspect.

In some embodiments, an outer surface of the cylinder may be at least partly roughened. The roughened surface may cause transformation of the laminar layer around the cylinder into a turbulent layer. The turbulent layer may better attach to the cylinder and this may reduce the width of the wake and the drag.

In some of these embodiments, the outer surface may comprise a plurality of dimples. This is one alternative for creating a roughened surface. Other known ways of creating a roughened surface, like for example ZZ tape, may also be foreseen.

In a further aspect a wind turbine is provided. The wind turbine may comprise at least one blade substantially as hereinbefore described and a cylinder drive mechanism for activating rotation of the cylinder. This is one possibility for controlling the speed of the cylinder. In alternative embodiments, other speed control mechanisms may also be foreseen. For example a wind turbine having at least one blade substantially as hereinbefore described may also be provided with a brake for stopping at least in part rotation of the cylinder. In yet further embodiments, a brake may also be provided in a wind turbine comprising at least one blade substantially as hereinbefore described and a cylinder drive mechanism.

In some embodiments, the wind turbine may further comprise a control system for controlling the rotational speed provided by the cylinder drive. In some of these cases, the control system may be adapted to change the rotational speed of the cylinder as a function of the rotational speed of the rotor. The Magnus effect depends particularly on the ratio of the velocity of the outer surface of the cylinder and the velocity of the incoming air flow (which depends directly on the rotational speed of the rotor). In some cases having a brake, the control system may further control activation and/or deactivation of the brake.

In some embodiments, the control system may further be designed for adapting the direction of rotation of the cylinder. Changing the direction of rotation of the cylinder may be interesting in those cases in which it is desired to reduce the lift, e.g. when wind turbine operation is to be interrupted.

In yet a further aspect a method of controlling the lift of a wind turbine blade substantially as hereinbefore described is provided, wherein operation of the wind turbine may comprise a sub-nominal zone of operation for wind speeds below a nominal wind speed and a supra-nominal zone of operation for wind speeds equal to or above the nominal wind speed. The method may comprise selectively activating rotation of the cylinder with respect to the blade root portion as a function of the wind speed such that in the supra-nominal zone of operation the wind speed may indirectly be determined by the pitch angle and in the sub-nominal zone of operation the wind speed may indirectly be determined by the velocity of the rotor. This way, in the supra-nominal zone of operation rotation of the cylinder helps reducing the width of the wake thus reducing the drag of the blade and in the sub-nominal zone of operation rotation of the cylinder enhances the lift as the blade root portion now contributes to the lift of the blade. In some cases it may be found that the gains provided by the rotating cylinder are low compared to the "losses" of activating the system. Losses in this sense may be understood to comprise e.g. a loss of energy as the cylinder needs to be rotated, and the wear of the system. At very low wind speeds, it may not be useful.

Additional objects, advantages and features of embodiments of the present invention will become apparent to those skilled in the art upon examination of the description, or may be learned by practice of the invention.

BRIEF DESCRIPTION OF THE DRAWINGS

Particular embodiments of the present invention will be described in the following by way of non-limiting examples, with reference to the appended drawings, in which:

Figure 1 shows a typical power curve of a wind turbine (hereinbefore mentioned and described);

Figures 2a and 2b show different partial views of a wind turbine blade according to an embodiment;

Figure 3 shows a partial view of a wind turbine blade according to another embodiment;

Figures 4a and 4b show partial views of a wind turbine blade according to further embodiments; and

Figure 5 shows a partial cross-sectional view of a wind turbine blade according to yet a further embodiment.

DETAILED DESCRIPTION

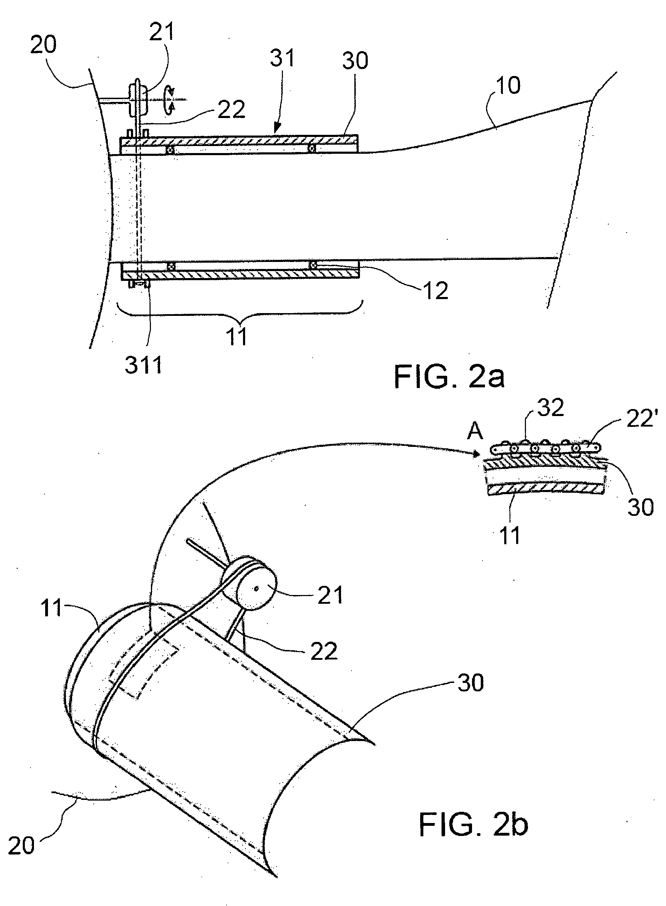

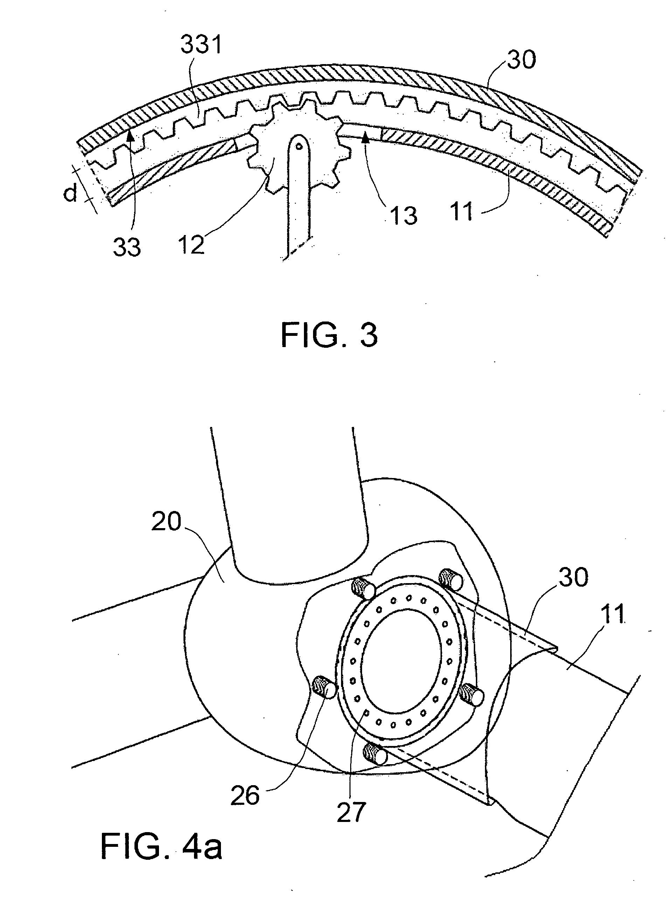

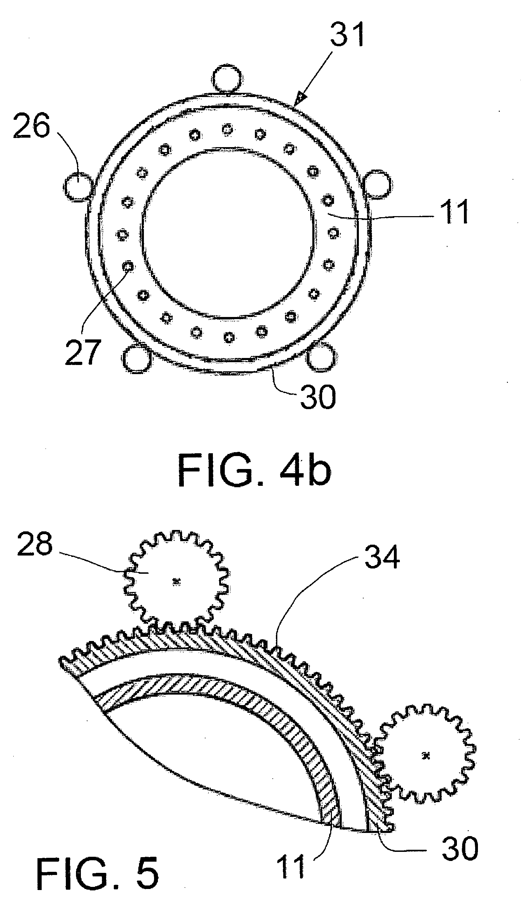

Figure 2a shows a schematic partial longitudinal section view of the attachment of a blade 10 to a hub 20 of a wind turbine. The attachment of the blade to the hub may be accomplished with any a suitable bearing system (not shown). The blade 10 may comprise a blade root portion 11 having a substantially cylindrical shape (see figure 4b). A cylinder 30 may be rotatably mounted around the blade root portion 11 by for example two annular bearings 12. In alternative embodiments other number of bearings may be used. Furthermore, other ways of rotatably mounting the cylinder around the blade root portion may also be foreseen for example as shown in the example of figure 3.

The following examples are only some of several possible alternatives available for activating rotation of the cylinder 30 around the blade root portion 11.

The example of figure 2a shows that the hub 20 may be provided with one or more drives (not shown) operatively coupled with a wheel or roller 21. A belt 22 may be arranged around the roller 21 and the cylinder 30 such that rotation of the roller 21 causes rotation of the cylinder 30. In these cases an outer surface 31 of the cylinder may comprise guiding means such as for example a pair of annular protrusions 311 adapted to guide the belt 22. In alternative examples a different number of wheels or rollers may also be provided.

Figure 2b shows a partial perspective view of figure 2a. Enlarged detail A of figure 2b shows an alternative example in which the belt may be replaced by a chain 22', a track or other perforated or indented material. In these cases an outer surface of the cylinder may be provided with an annular gear 32 or any other toothed annular segment, i.e. an arc segment provided with radial projections that can engage a chain or similar passing over it. The chain can thus be engaged in the radial projections of the cylinder. In addition, in these cases the wheels or rollers provided in the hub may be replaced by a sprocket wheel or pinion so that the chain can also be engaged in the radial projections of the sprocket wheel. In other alternatives, more sprocket wheels or pinions may also be foreseen and the sprocket wheels may also be operatively coupled to one or more drives that may be arranged inside the hub.

The example of figure 3 shows a partial cross-section of a blade root portion according to a different embodiment. In this case, an inner side 33 of the cylinder may be provided with an annular gear 331 and one or more pinions 12 (only one shown) that may be arranged to mesh with the annular gear 33, may be provided inside the blade root portion 11.

In some of these cases, the blade root portion 11 may be provided with one aperture 13 for each of the pinions 12. This way, the teeth of the pinions reach out of the blade root and a distance d between the blade root portion 11 and the cylinder 30 can be at least partly reduced. This may help to reduce potential vibrations between the cylinder and the blade root.

The example of figure 4a shows a partial perspective view of the attachment of a blade to a hub 20 of a wind turbine. Figure 4b shows an elevation view of figure 4a. In this case, a plurality of rollers 26 may be provided in the hub 20. The rollers 26 may be arranged to touch the outer surface (reference 31 of figure 4b) of the cylinder. Inside the hub 20 one or more drives (not shown) which may be operatively coupled with the rollers 26, may also be provided. This way, rotation of the rollers produce rotation of the cylinder rotatably mounted around the blade root portion 11. In figures 4a and 4b, bolts 27 used for securing the blade to the hub are also sketched. The cylinder may be rotatably mounted around the blade root portion by, for example, a plurality of bearings provided between an outer surface of the blade root portion and an inner surface of the cylinder.

Figure 5 shows a detail of a partial cross-section of an alternative example. In this case, the rollers have been replaced by one or more pinions 28 arranged to mesh with an annular gear 34 provided on the outer surface of the cylinder 30. The pinions 28 may be arranged in the hub, operatively coupled with one or more drives (not shown) that may be housed in the hub. In these cases, the cylinder 30 may be rotatably mounted around the blade root portion 11 by for example annular bearings (not shown).

**Claims**

1.  Wind turbine blade comprising a proximal blade root portion for coupling to a hub or extender of a wind turbine, a distal airfoil portion having a lift-generating shape, and a transition portion between them, the blade root portion having a substantially cylindrical shape, wherein the blade further comprises a cylinder rotatably mounted around the blade root portion.

2.  Wind turbine blade according to claim 1, wherein an outer surface of the cylinder is at least partly roughened.

3.  Wind turbine blade according to claim 2, wherein the outer surface of the cylinder comprises a plurality of dimples.

4.  Wind turbine comprising one or more blades according to any of claims 1 - 3 and further comprising a cylinder drive mechanism.

5.  Wind turbine according to claim 4, wherein an inner side of the cylinder of at least one of the blades comprises an annular gear and the blade root portion comprises one or more pinions arranged to mesh with the annular gear.

6.  Wind turbine according to claim 5, wherein the blade root portion comprises an aperture for each of the pinions, such that the pinions housed inside the blade root portion can mesh with the annular gear.

7.  Wind turbine according to claim 4, further comprising a hub, wherein the cylinder drive mechanism for rotating the cylinder of at least one of the blades comprises one or more drives located in the hub and operatively coupled to one or more rollers, and wherein a belt is arranged around the cylinder and around the rollers such that rotation of the rollers causes rotation of the cylinder.

8.  Wind turbine according to claim 4, further comprising a hub, wherein the cylinder drive mechanism for rotating the cylinder of at least one of the blades comprises one or more drives located in the hub and operatively coupled to one or more sprocket wheels, and wherein a sprocket chain is arranged around the cylinder and the sprocket wheels such that rotation of the sprocket wheels causes rotation of the cylinder.

9. Wind turbine according to claim 8, wherein an outer side of the cylinder comprises one or more toothed annular segments arranged to engage the sprocket chain around the cylinder.

10. Wind turbine according to claim 4, further comprising a hub, wherein an outer side of the cylinder of at least one of the blades comprises an annular gear and the hub comprises one or more pinions arranged to mesh with the annular gear.

11. Wind turbine according to claim 4, further comprising a hub, wherein the hub comprises one or more rollers arranged such that in use the rollers are in contact with an outer surface of the cylinder such that rotation of the rollers causes rotation of the cylinder.

12. Wind turbine according to any of claims 4 - 11, further comprising a control system for controlling the rotational speed provided by the cylinder drive.

13. Wind turbine according to claim 12, wherein the control system is adapted to change the rotational speed of the cylinder as a function of the rotational speed of the rotor.

14. Wind turbine according to claim 12 or 13, wherein the control system is further designed for adapting the direction of rotation of the cylinder.

15. Method of controlling the lift of a wind turbine blade according to any of claims 1-3, wherein operation of the wind turbine comprises a sub-nominal zone of operation for wind speeds below a nominal wind speed and a supra-nominal zone of operation for wind speeds equal to or above the nominal wind speed and the method comprises activating rotation of the cylinder with respect to the blade root portion as a function of the wind speed such that in the supra-nominal zone of operation the wind speed is indirectly determined by the pitch angle and in the sub-nominal zone of operation the wind speed is indirectly determined by the velocity of the rotor.


**Patentansprüche**

1. Windturbinenblatt umfassend einen proximalen Blattwurzelteil zur Kupplung an eine Nabe oder an ein Verlängerungsstück einer Windturbine, wobei ein distaler Tragflächenteil eine auftrieberzeugende Form hat, und einen sich dazwischen befindenden Übergangsbereich umfasst, wobei der Blattwurzelteil eine im Wesentlichen zylindrische Form hat, wobei das Blatt weiterhin einen Zylinder umfasst, der drehbar um den Blattwurzelteil herum montiert ist.

2. Windturbinenblatt nach Anspruch 1, wobei eine äußere Oberfläche des Zylinders mindestens teilweise aufgeraut ist.

3. Windturbinenblatt nach Anspruch 2, wobei die äußere Oberfläche des Zylinders eine Vielzahl von Grübchen umfasst.

4. Windturbine umfassend ein oder mehrere Blätter nach einem der Ansprüche 1 - 3 und weiterhin umfassend eine Vorrichtung zum Antrieb des Zylinders.

5. Windturbine nach Anspruch 4, wobei eine innere Seite des Zylinders von mindestens einem der Blätter ein ringförmiges Getriebe umfasst und der Blattwurzelteil ein oder mehrere Ritzel umfasst, die angeordnet sind, um in das ringförmige Getriebe einzugreifen.

6. Windturbine nach Anspruch 5, wobei der Blattwurzelbereich eine Öffnung für jedes einzelne Ritzel umfasst, so dass die im Blattwurzelteil angeordneten Ritzel in das ringförmige Getriebe eingreifen können.

7. Windturbine nach Anspruch 4, weiterhin umfassend eine Nabe, wobei die Vorrichtung zum Zylinderantrieb zur Drehung des Zylinders von mindestens einem der Blätter einen oder mehrere Antriebe umfasst, die in der Nabe angeordnet sind und die betriebsfähig an einem oder mehreren Walzen befestigt sind, und wobei ein Gurt um den Zylinder und um die Walzen herum angeordnet ist, so dass die Drehung der Walzen eine Drehung des Zylinders hervorbringt.

**8.** Windturbine nach Anspruch 4, weiterhin umfassend eine Nabe, wobei die Vorrichtung zum Zylinderantrieb zur Drehung des Zylinders von mindestens einem der Blätter einen oder mehrere Antriebe umfasst, die in der Nabe angeordnet sind und die betriebsfähig an einem oder mehreren Kettenrädern befestigt sind, und wobei eine Zahnkette um den Zylinder und um die Kettenräder herum angeordnet ist, so dass die Drehung des Kettenrads eine Drehung des Zylinders hervorbringt.

**9.** Windturbine nach Anspruch 8, wobei eine äußere Seite des Zylinders einen oder mehrere ringförmige Zahnsegmente umfasst, die angeordnet sind, um in die Zahnkette um den Zylinder herum einzugreifen.

**10.** Windturbine nach Anspruch 4, weiterhin umfassend eine Nabe, wobei eine äußere Seite des Zylinders von mindestens einem der Blätter ein ringförmiges Getriebe umfasst und die Nabe ein oder mehrere Ritzel umfasst, die angeordnet sind, um in das ringförmige Getriebe einzugreifen.

**11.** Windturbine nach Anspruch 4, weiterhin umfassend eine Nabe, wobei die Nabe einen oder mehrere Walzen umfasst, die derart angeordnet sind, dass die Walzen im Einsatz in Verbindung mit einer äußeren Oberfläche des Zylinders sind, so dass die Drehung der Walzen eine Drehung des Zylinders hervorbringt.

**12.** Windturbine nach einem der Ansprüche 4 - 11, weiterhin umfassend ein Steuersystem zur Steuerung der durch den Zylinderantrieb bereitgestellten Drehgeschwindigkeit.

**13.** Windturbine nach Anspruch 12, wobei das Steuersystem angepasst ist, um die Drehgeschwindigkeit des Zylinders als eine Funktion der Drehgeschwindigkeit des Rotors zu ändern.

**14.** Windturbine nach Anspruch 12 oder 13, wobei das Steuersystem weiterhin ausgeführt ist, um die Richtung der Zylinderdrehung anzupassen.

**15.** Verfahren zur Kontrolle des Auftriebs eines Windturbinenblattes nach einem der Ansprüche 1 - 3, wobei der Betrieb der Windturbine einen subnominalen Betriebsbereich für Windgeschwindigkeiten unterhalb einer Nennwindgeschwindigkeit und einen supranominalen Betriebsbereich für Windgeschwindgikeiten entsprechend der Nennwindgeschwindigkeit oder höher umfasst und das Verfahren die Aktivierung der Drehung des Zylinders bezüglich des Blattwurzelteils als eine Funktion der Windgeschwindigkeit umfasst, so dass in dem supranominalen Betriebsbereich die Windgeschwindigkeit indirekt durch den Blattverstellwinkel bestimmt wird und in dem subnominalen Betriebsbereich die Windgeschwindigkeit indirekt durch die Geschwindigkeit des Rotors bestimmt wird.

## Revendications

**1.** Pale d'éolienne comprenant une partie de racine de pale proximale pour le couplage à un moyeu ou à une rallonge d'une éolienne, une partie de voilure distale ayant une forme génératrice de poussée, et une région de transition située entre celles-ci, ayant la partie de racine de pale une forme essentiellement cylindrique, dans laquelle la pale comprend en outre un cylindre monté à rotation autour de la partie de racine de pale.

**2.** Pale d'éolienne selon la revendication 1, dans laquelle une surface extérieure du cylindre est au moins en partie rendue rugueuse.

**3.** Pale d'éolienne selon la revendication 2, dans laquelle la surface extérieure du cylindre comprend une pluralité de fossettes.

**4.** Éolienne comprenant une ou plusieurs pales selon l'une quelconque des revendications 1 - 3 et comprenant en outre un mécanisme de commande du cylindre.

**5.** Éolienne selon la revendication 4, dans laquelle un côté intérieur du cylindre d'au moins une des pales comprend un engrenage annulaire et la partie de racine de pale comprend un ou plusieurs pignons disposés afin d'intervenir dans l'engrenage annulaire.

**6.** Éolienne selon la revendication 5, dans laquelle la partie de racine de pale comprend une ouverture pour chacun des pignons, de façon que les pignons logés dans la partie de racine de pale peuvent intervenir dans l'engrenage annulaire.

**7.** Éolienne selon la revendication 4, comprenant en outre un moyeu, dans laquelle le mécanisme de commande du cylindre pour faire pivoter le cylindre d'au moins une des pales comprend une ou plusieurs commandes situées dans le moyeu et couplées de façon opérationnelle avec un ou plusieurs rouleaux, et dans laquelle une courroie est disposée autour du cylindre et autour des rouleaux de façon que la rotation des rouleaux entraîne une rotation du cylindre.

**8.** Éolienne selon la revendication 4, comprenant en outre un moyeu, dans laquelle le mécanisme de commande du cylindre pour faire pivoter le cylindre d'au moins une des pales comprend une ou plusieurs commandes situées dans le moyeu et couplées de façon opérationnelle avec une ou plusieurs roues dentées, et dans laquelle une chaîne de distribution est disposée autour du cylindre et autour des roues dentées de façon que la rotation des roues dentées entraîne une rotation du cylindre.

**9.** Éolienne selon la revendication 8, dans laquelle un côté extérieur du cylindre comprend un ou plusieurs segments annulaires dentés disposés afin d'intervenir dans la chaîne de distribution autour du cylindre.

**10.** Éolienne selon la revendication 4, comprenant en outre un moyeu, dans laquelle un côté extérieur du cylindre d'au moins une des pales comprend un engrenage annulaire et le moyeu comprend un ou plusieurs pignons disposés afin d'intervenir dans l'engrenage annulaire.

**11.** Éolienne selon la revendication 4, comprenant en outre un moyeu, dans laquelle le moyeu comprend un ou plusieurs rouleaux disposés de façon que lors du fonctionnement les rouleaux sont en contacte avec une surface extérieure du cylindre de façon que la rotation des rouleaux entraîne une rotation du cylindre.

**12.** Pale d'éolienne selon l'une quelconque des revendications 4 - 11, comprenant en outre un système de contrôle pour contrôler la vitesse de rotation fournie par la commande du cylindre.

**13.** Éolienne selon la revendication 12, dans laquelle le système de réglage est adapté pour modifier la vitesse de rotation du cylindre comme une fonction de la vitesse de rotation du rotor.

**14.** Éolienne selon la revendication 12 ou 13, dans laquelle le système de réglage est conçu en outre pour adapter la direction de rotation du cylindre.

**15.** Procédé de contrôle de la poussée d'une pale d'éolienne selon l'une quelconque des revendications 1-3, dans lequel le fonctionnement de l'éolienne comprend une région de fonctionnement sous-nominal pour des vitesses du vent au-dessous d'une vitesse nominale du vent et une région de fonctionnement supra-nominal pour des vitesses du vent égales à ou au-dessus de la vitesse nominale du vent et dans lequel le procédé comprend activer la rotation du cylindre par rapport à la région de racine de pale comme une fonction de la vitesse du vent de façon que dans la région de fonctionnement supra-nominal la vitesse du vent est déterminée de façon indirecte par l'angle de pas de pale et dans la région de fonctionnement sous-nominal la vitesse du vent est déterminée de façon indirecte par la vitesse du rotor.

FIG. 1

FIG. 2a

FIG. 2b

**FIG. 3**

**FIG. 4a**

FIG. 4b

FIG. 5

**EP 2 848 803 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6910867 B
- DE 102007089285

- WO 2008111922 A